# EUROPEAN PATENT APPLICATION

(11) **EP 4 459 343 A1**
(43) Date of publication of application: **06.11.2024**
(21) Application number: 22923364.8
(22) Date of filing: 31.10.2022
(51) Int. Cl.: G02B 6/44

(54) **OPTICAL CABLE JUNCTION BOX AND RELATED OPTICAL CABLE CONNECTING APPARATUS**

(30) Priority: 30.01.2022 CN 202210113889
(71) Applicant: Huawei Technologies Co., Ltd., Shenzhen, Guangdong 518129 (CN)
(72) Inventor: SHU, Siwen, Shenzhen, Guangdong 518129 (CN); XIONG, Wei, Shenzhen, Guangdong 518129 (CN); JIANG, Wen, Shenzhen, Guangdong 518129 (CN)
(74) Representative: Thun, Clemens
(86) International application number: PCT/CN2022/128638
(87) International publication number: WO 2023/142566

(57) **Abstract**

An optical splice closure (200) and an optical cable connection apparatus are provided. The optical splice closure (200) includes: a enclosure body (130), provided with an accommodating cavity (131) and an opening (132) located on one end of the accommodating cavity (131); and a cover assembly (100), detachably mounted to the opening (132). The cover assembly (100) includes: a first base (20) and a second base (30) that are assembled together; and a plurality of sealing units (110), detachably mounted at different positions between the first base (20) and the second base (30). Each sealing unit (110) is provided with at least one through hole (111) for mounting an optical cable. The optical cable is applicable to extending into the accommodating cavity (131) through the at least one through hole (111). Elastic parts are disposed in each sealing unit (110) and form at least a part of the at least one through hole (111). The first base (20) and the second base (30) can be operated to move toward each other to squeeze the plurality of sealing units (110), to enable a plurality of corresponding elastic parts in the plurality of sealing units (110) to be deformed, to seal the at least one through hole (111) for mounting the optical cable.

## Description

This application claims priority to Chinese Patent Application No. 202210113889.9, filed with the China National Intellectual Property Administration on January 30, 2022 and entitled "OPTICAL SPLICE CLOSURE AND RELATED OPTICAL CABLE CONNECTION APPARATUS", which is incorporated herein by reference in its entirety.

### TECHNICAL FIELD

This application relates to the field of optical cable connection, and more specifically, to an optical splice closure and a related optical cable connection apparatus.

### BACKGROUND

An optical splice closure is an apparatus that connects two or more optical cables and that has a function of protecting an optical cable splice. The optical splice closure is one of important devices in optical cable line engineering construction. The quality of the optical splice closure directly affects the quality of an optical cable line and a service life of the optical cable line.

In a fiber-to-the-x (Fiber-to-The-X, or FFTX) service, for example, a fiber-to-the-home (FTTH) service, a fiber-to-the-cabinet (FTTCab) service, or a fiber-to-the-building (FTTB) service, optical splice closures such as a horizontal type closure and a dome type closure are applied to different application scenarios of a connection between trunk cables, a connection between a trunk cable and a branch cable, and a connection between a trunk cable and a distribution cable. In consideration of the foregoing different application scenarios, the optical splice closure generally needs to be compatible with connections between a trunk cable, a branch cable, and a distribution cable on an optical distribution network (ODN). This imposes a high requirement on compatibility of the optical splice closure.

In addition, the optical splice closure also has a high requirement on operability and sealing. This is prominent in all ODN products.

### SUMMARY

One of objectives of this disclosure is to provide an improved optical splice closure, which can at least implement mounting an optical cable on the optical splice closure in a more convenient manner.

According to a first aspect of this disclosure, an optical splice closure is provided. The optical splice closure includes: a enclosure body, provided with an accommodating cavity and an opening located on one end of the accommodating cavity; and a cover assembly, detachably mounted to the opening. The cover assembly includes: a first base and a second base that are assembled together; and a plurality of sealing units, detachably mounted at different positions between the first base and the second base. Each sealing unit is provided with at least one through hole for mounting an optical cable. The optical cable is applicable to extending into the accommodating cavity through the at least one through hole. Elastic parts are disposed in each sealing unit and form at least a part of the at least one through hole. The first base and the second base can be operated to move toward each other to squeeze the plurality of sealing units, to enable a plurality of corresponding elastic parts in the plurality of sealing units to be deformed, to seal the at least one through hole for mounting the optical cable.

It is easy to understand that, in the optical splice closure in this disclosure, a relative movement operation of the first base and the second base may be allowed to be used, to implement one-time or synchronous sealing of a plurality of optical cables mounted on the plurality of sealing units. Therefore, sealing efficiency of the optical cables on the optical splice closure is improved. In addition, a structure of this disclosure is not limited to a specific cable type.

In some embodiments, the first base may include: a first annular wall and a plurality of first extension arms, where the plurality of first extension arms extend radially from the first annular wall to an outer side. Each of the sealing units is detachably mounted in a compartment limited by the first annular wall and two adj acent first extension arms. In this manner, each sealing unit may be accommodated and supported by a corresponding compartment on the first base. This makes it easy to mount the sealing unit on the first base.

In some embodiments, the plurality of sealing units may be evenly distributed around the first annular wall, and adjacent sealing units are separated by the first extension arm. It is easy to understand that, in this manner, pressing force applied to the plurality of sealing units between the first base and the second base may be more uniform, so that a joint squeeze operation for the plurality of sealing units is facilitated. This also makes it easier to seal a plurality of optical cables at a time (or synchronously).

In some embodiments, the cover assembly may further include: a handle assembly, mounted to the first base and the second base, and capable of being operated to rotate, to enable the first base and the second base to move relative to each other along an axial direction of the cover assembly. With the help of the handle assembly, a user may conveniently implement a relative movement operation of the first base and the second base.

In some embodiments, the handle assembly may include: an operable handle and a screw rod. One end of the screw rod is attached to the handle, and the other end passes through the first base, and is screwed to the second base. In this manner, the first base and the second base may be coupled together by using the screw rod, and a relative movement operation of the first base and the second base may be conveniently implemented through rotation of the screw rod.

In some embodiments, the screw rod may be disposed to pass through a through hole on the first base, a flange is disposed on the screw rod, and the flange is positioned to be adjacent to the through hole on the first base and on a side that is of the first base and that faces the handle, to allow only the second base to move toward the first base along the axial direction of the cover assembly in a rotation operation process of the handle, and prevent the first base from moving toward the second base. This may be advantageous for a sealing operation of the optical cable on the optical splice closure, and this is because the sealing unit is mainly carried on the first base. In addition, in this manner, even if the first base is wedged on the enclosure body by a hold hoop member, the handle assembly may be allowed to be controlled to implement relative movement and squeezing of the second base toward the first base.

In some embodiments, each sealing unit may include a first sealing member and a second sealing member that are detachably assembled together, and the at least one through hole is limited by the first sealing member and the second sealing member in combination. Compared with the second sealing member, the first sealing member is positioned to be farther away from a center of the first base. In this manner, mounting the optical cable in the sealing unit in a conventional cable threading manner may be avoided.

In some embodiments, a radial direction of a compartment on the first base for mounting each of the sealing units is open, to allow the first sealing member to be detachably mounted to the first base along the radial direction and to be spliced with the second sealing member. It is easy to understand that a radial open structure of the foregoing first base may allow the optical cable to be mounted on both the sealing unit and the first base in a manner of radially placing instead of a cable threading manner. This makes it more convenient to mount the optical cable in the closure.

In some embodiments, the first sealing member and the second sealing member include upper press blocks, lower press blocks, and elastic parts disposed between the upper press blocks and the lower press blocks, and the upper press blocks can move toward the lower press blocks under pressure of the second base, to squeeze the elastic parts and enable the elastic parts to be deformed. A combination of the elastic part of the first sealing member and the elastic part of the second sealing member forms at least a part of the at least one through hole. In this manner, the elastic part may be squeezed through relative movement between the upper press block and the lower press block, so that sealing the optical cable mounted in the through hole is implemented.

In some embodiments, the first sealing member further includes an enclosure, and the enclosure at least wraps and seals the upper press block and the lower press block from a radial outer side of the first sealing member, and is fastened only to the lower press block, to avoid obstructing movement of the upper press block relative to the lower press block. In this manner, a case in which the upper press block, the lower press block, and the elastic part between the upper press block and the lower press block are visible from the radial outer side may be avoided. In addition, existence of the enclosure further makes it more convenient to arrange another functional component on the enclosure.

In some embodiments, the enclosure is provided with a clamping structure, and the clamping structure includes a clamping component and a spring component. The spring component is mounted on the enclosure, one end of the clamping component is mounted to the spring component, and the other end is applicable to being clamped to the first base, to clamp and fasten the first sealing member to the first base. This manner may allow the first sealing member to be detachably fastened to the first base by using the clamping structure provided on the enclosure.

In some embodiments, the clamping component further includes a clamping operation part, and the clamping operation part is exposed from the enclosure in a radial direction of the first base, to enable the clamping operation part to be operated on a radial outer side of the cover assembly, and enable the clamping structure to be clamped to the first base or released from the first base. In this manner, a user can operate the clamping structure on the radial outer side of the cover assembly, to implement clamping and releasing of the first sealing member on the first base.

In some embodiments, a guide part may be further disposed on the enclosure, a mating part is disposed on the upper press block of the first sealing member, and the mating part and the guide part are assembled together, to guide the upper press block to move relative to the lower press block. This manner may allow movement of the upper press block relative to the lower press block to be guided in a predetermined direction.

In some embodiments, the second base includes: a second annular wall and a plurality of second extension arms, and the plurality of second extension arms extend radially from the second annular wall to an outer side. A diameter of the second annular wall is greater than a diameter of the first annular wall. When the second base is mounted to the first base, the second annular wall and the second extension arm press against the sealing unit. In this manner, when being mounted to the first base, the second base may press against the sealing unit.

In some embodiments, a side that is of each second extension arm and that faces the first extension arm is provided with a groove structure. When the second base is mounted to the first base, each first extension arm is partially embedded in a groove structure of a corresponding second extension arm. This manner may allow the first base and the second base to be mounted together in a nested manner.

In some embodiments, the elastic part may be made of gel. It is easy to understand that the gel is merely an example of preparing the elastic part, and does not constitute any limitation on the elastic part of this disclosure. However, the gel has a unique advantage, for example, easy preparation, excellent resilience, and suitability for wrapping and sealing the optical cable in a deform manner.

According to a second aspect of this disclosure, an optical cable connection apparatus is provided. The optical cable connection apparatus includes the optical splice closure according to the first aspect.

It should be further understood that content described in the summary is not intended to limit the key or important features of embodiments of this disclosure, nor to limit the scope of this disclosure. Other features of embodiments of this disclosure will be easily understood by the following descriptions.

### BRIEF DESCRIPTION OF DRAWINGS

The foregoing and other features, advantages, and aspects of embodiments of this disclosure become more apparent with reference to the accompanying drawings and with reference to the following detailed descriptions. In the accompanying drawings, same or similar reference numerals in the accompanying drawings represent same or similar elements:
FIG. 1 is a schematic diagram of an appearance of an optical splice closure according to an example embodiment of this disclosure;
FIG. 2 is a schematic diagram of a cross-sectional view of an optical splice closure according to an example embodiment of this disclosure;
FIG. 3 is a schematic diagram of an exploded view of an optical splice closure according to an example embodiment of this disclosure;
FIG. 4 is a top view of a cover assembly in an optical splice closure according to an example embodiment of this disclosure;
FIG. 5 is a schematic diagram of a structure of mounting a first base and a second base in a cover assembly in an optical splice closure according to an example embodiment of this disclosure;
FIG. 6 is a schematic diagram of an exploded view of a cover assembly in an optical splice closure according to an example embodiment of this disclosure;
FIG. 7a to FIG. 7c are schematic diagrams of structures of sealing units in a cover assembly in an optical splice closure according to example embodiments of this disclosure;
FIG. 8 is a top view of a sealing unit having a clamping structure in a cover assembly in an optical splice closure according to an example embodiment of this disclosure;
FIG. 9 is a schematic diagram of a clamping structure of a sealing unit in an optical splice closure according to an example embodiment of this disclosure;
FIG. 10 is a schematic diagram of a structure of an optical fiber operation unit in an optical splice closure according to an example embodiment of this disclosure;
FIG. 11 is a schematic diagram of a structure of a splicing tray support of an optical fiber operation unit in an optical splice closure according to an example embodiment of this disclosure;
FIG. 12 is a schematic diagram of a structure of cooperation between a splicing tray support and a fusion splice protector in an optical splice closure according to an example embodiment of this disclosure; and
FIG. 13 is a schematic diagram of a structure of adjusting a position of a loose tube coiled support in an optical splice closure according to an example embodiment of this disclosure.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure may be implemented in various forms, and should not be construed as being limited to embodiments described herein. On the contrary, these embodiments are provided, so that this disclosure can be thoroughly and completely understood. It should be understood that the accompanying drawings and embodiments of this disclosure are merely used as examples, but are not intended to limit the protection scope of this disclosure.

As described in the foregoing background, an optical splice closure plays an important role in optical cable line engineering construction. However, the conventional optical splice closure may be disadvantageous in terms of operation. For example, in the conventional optical splice closure, a customer needs to distinguish between different cable types such as a straight-through cable and a branch cable during construction, and use different cable ports for mounting based on different cable types. As a result, specifications of sealing members required by the cable ports are inconsistent. Consequently, material types are increased, and compatibility is poor. In addition, during sealing, heat shrink tubing on a single optical cable hole needs to be heated in sequence on a construction site to seal an optical cable. This needs to be implemented by using an external heat source device to heat the heat shrink tubing. Therefore, a device requirement is high and efficiency is low. In addition, in the conventional optical splice closure, the optical cable further needs to be mounted in a manner of passing through the cable port. This causes an inconvenient operation.

An objective of this disclosure is to provide an improved optical splice closure, which can implement mounting an optical cable on the optical splice closure in a more convenient manner, and a plurality of optical cables can be synchronously sealed on the optical splice closure in consideration of different cable types.

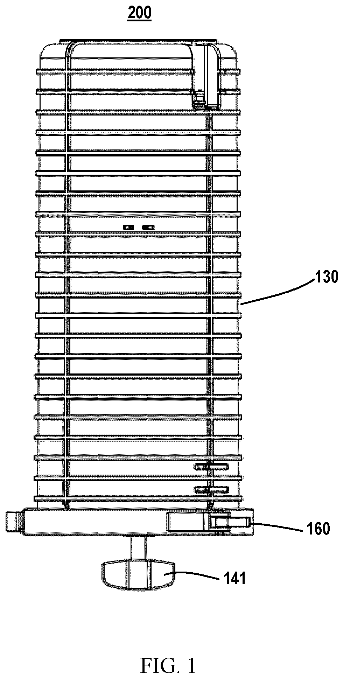

FIG. 1 to FIG. 3 are schematic diagrams of an overall appearance, a cross-sectional structure, and an exploded structure of an optical splice closure according to example embodiments of this disclosure.

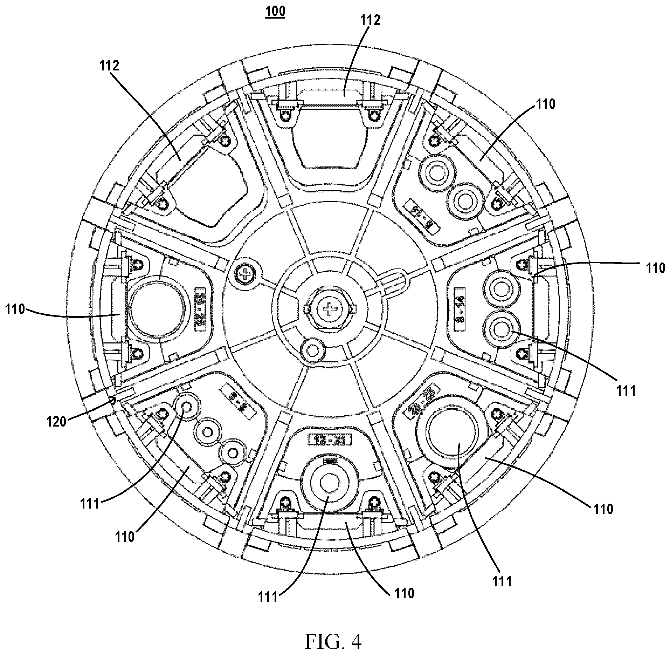

As shown in FIG. 1 to FIG. 3, the optical splice closure 200 mainly includes a enclosure body 130 and a cover assembly 100. The enclosure body 130 is provided with an accommodating cavity 131 and an opening 132 located on one end of the accommodating cavity 131. The cover assembly 100 may be detachably mounted to the opening 132. According to the design of this disclosure, one or more optical cables (which are not shown) may extend into the accommodating cavity 131 through at least one through hole 111 (as shown in the following FIG. 4) provided on the cover assembly 100. The accommodating cavity may provide space used for, for example, optical cable storage and optical cable splice protection. To facilitate an operation, for example, storage, splitting, and fusing and splicing on the optical cable, in some embodiments, for example, an optical fiber operation unit 150 may be disposed in the accommodating cavity 131, as further described in the following.

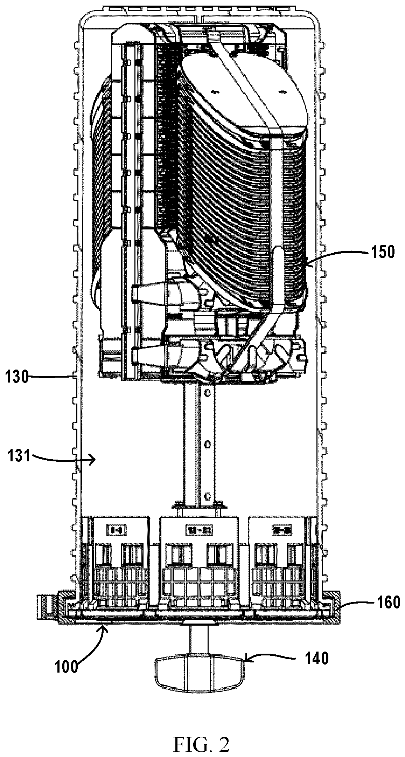

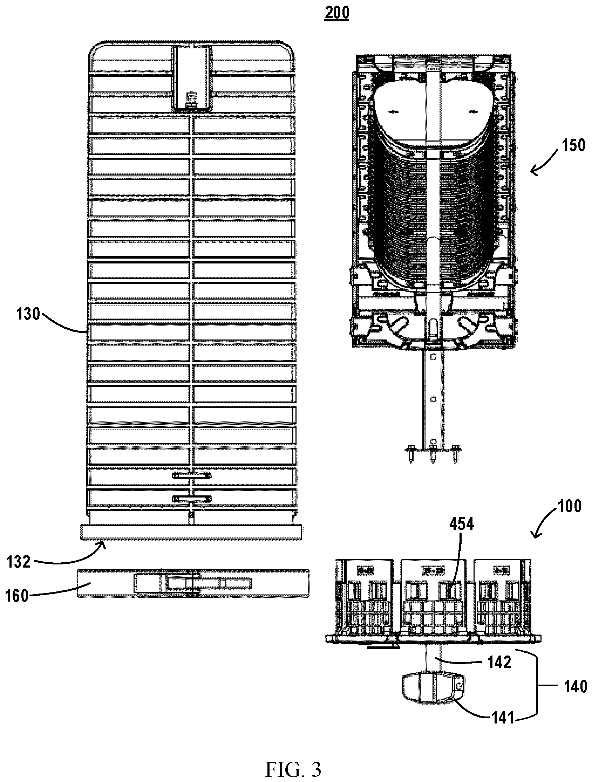

In addition to the enclosure body 130 and the cover assembly 100, in some embodiments, the optical splice closure 200 may further include a hold hoop member 160. As shown in FIG. 2 and FIG. 3, the hold hoop member 160 may be annular and have an inner slope structure. In the inner slope structure, an opening edge of the enclosure body 130 and an edge of the cover assembly 100 may be wedged together, and the enclosure body 130 and the cover assembly 100 may further be sealed by using a sealing ring made of a rubber material.

The foregoing briefly describes an overall structure of the optical splice closure 200. As shown in FIG. 1 to FIG. 3, the optical splice closure 200 is shown in a form of a dome type closure. The enclosure body 13 is generally in a tubular shape, and the cover assembly 100 is generally in a disc shape. However, it will be understood that a technical concept of this disclosure is not limited to a shape of the dome type closure, but may be applicable to a closure structure in any other proper shape.

The following mainly describes a structure and an implementation principle of the cover assembly 100 in the optical splice closure 200 in this disclosure.

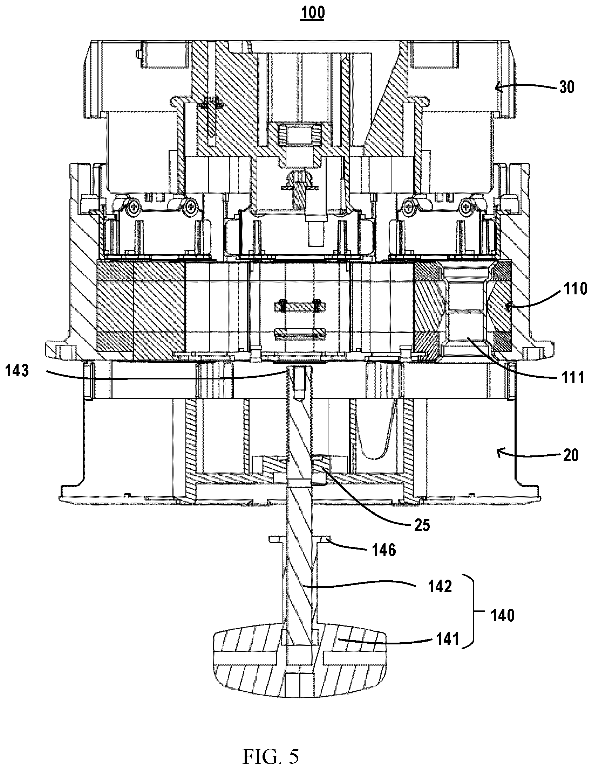

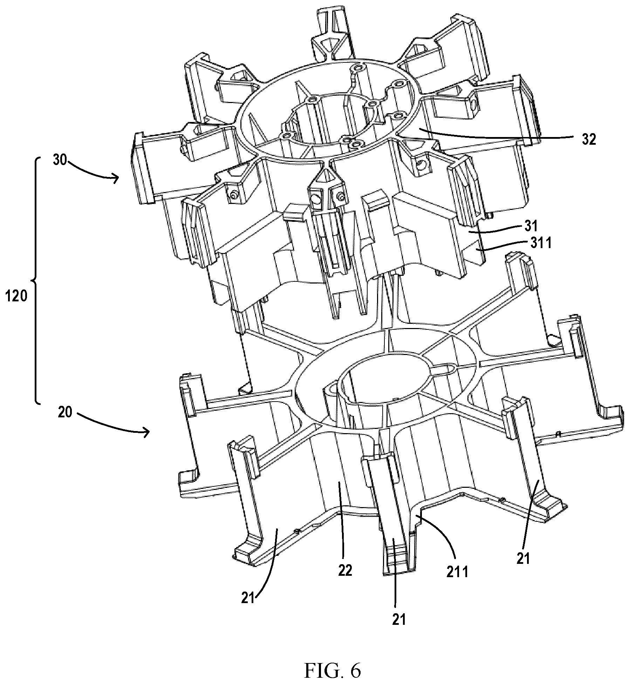

FIG. 4 is a top view of the cover assembly in the optical splice closure according to an example embodiment of this disclosure; FIG. 5 is a schematic diagram of a structure of mounting a first base and a second base in the cover assembly in the optical splice closure according to an example embodiment of this disclosure; and FIG. 6 is a schematic diagram of an exploded view of the cover assembly in the optical splice closure according to an example embodiment of this disclosure.

As shown in FIG. 4 to FIG. 6, the cover assembly 100 mainly includes a plurality of sealing units 110 and a base 120 for mounting the plurality of sealing units 110.

A function of each sealing unit 110 in the plurality of sealing units 110 is to mount an optical cable (which is not shown), so that the optical cable is allowed to extend into the accommodating cavity 131 through the sealing unit 110, and is to seal the optical cable at a mounting position of the sealing unit 110, so that a high-level sealing requirement is provided. For example, an IP 68 sealing requirement of an IEC 61300-2-23 standard is met.

To implement mounting the optical cable on the sealing unit 110, each sealing unit 110 may be provided with at least one through hole 111. Therefore, the optical cable may be mounted on the sealing unit 110 through the at least one through hole 111, and may extend into the accommodating cavity 131 through the at least one through hole 111. Only an example is used. FIG. 4 shows a sealing unit 110 that has one through hole 111, a sealing unit 110 that has two through holes 111, and a sealing unit 110 that has three through holes 111. However, it will be understood that a quantity of through holes does not constitute any limitation on this disclosure. In another embodiment, more through holes may be provided on the sealing unit 110. In addition, in some embodiments, sizes of through holes 111 on different sealing units 110 may alternatively be different from each other. This may be designed based on a size of an optical cable that needs to be mounted.

To implement sealing the optical cable at the mounting position of the sealing unit 110, at least a part of each through hole 111 may be limited by a deformable elastic part. As described below, the elastic part may be operationally squeezed to implement deformation of the elastic part, so that the optical cable is squeezed and the optical cable is sealed at the at least one through hole.

In some embodiments, the plurality of sealing units 110 may be arranged around a central axis of the cover assembly 100 in an annular direction. Only an example is used. FIG. 4 shows that six sealing units 110 are arranged around the central axis of the cover assembly 100 in the annular direction. It should be noted herein that a quantity of the plurality of sealing units 110 shown in FIG. 4 is merely an example. In another embodiment, more or fewer sealing units 110 may be arranged around the central axis of the cover assembly 100 in the annular direction. Particularly, the plurality of sealing units 110 may be arranged around the central axis of the cover assembly 100 in an entire annular direction.

In an embodiment in which the plurality of sealing units 110 occupy only a part of the annular direction of the central axis of the cover assembly 200, as shown in FIG. 4, the cover assembly 100 may optionally further include at least one dummy sealing unit 112. A structure, an overall appearance, and a function of the dummy sealing unit 112 may be the same as a structure, an overall appearance, and a function of the sealing unit 110. A difference lies in that the dummy sealing unit 112 does not include any through hole 111. It should be understood that the dummy sealing unit 112 is mounted on the base 120 as a replacement of the sealing unit 110. Therefore, the dummy sealing unit 112 may be detachably mounted on the base 120 in a manner similar to that of the sealing unit 110, and may be operationally squeezed in a manner similar to that of the sealing unit 110. It is further easy to understand that, when there is no need to mount excessive optical cables on the cover assembly 100, existence of the dummy sealing unit 112 is advantageous, and may avoid performing an additional sealing operation on a sealing unit 110 that has at least one through hole 111 but is not mounted with any optical cable. In some other embodiments, when a quantity of optical cables that need to be mounted is less than a quantity of at least one through hole 111 on the plurality of sealing units 110, a dummy cable plug may be mounted in the at least one through hole 111, without affecting sealing of the sealing units 110. It is easy to understand that, both the dummy sealing unit 112 and the dummy cable plug disposed in the at least one through hole 111 provide a degree of freedom for the quantity of optical cables that need to be mounted.

In some other embodiments, the plurality of sealing units 110 (and the optional dummy sealing unit 112) may be arranged around the central axis of the cover assembly 100 in an evenly distributed manner. It is easy to understand that, in the foregoing manner, the plurality of sealing units 110 (and the optional dummy sealing unit 112) may be arranged in a compact manner, and the plurality of sealing units 110 (and the optional dummy sealing unit 112) may be allowed to accept, under uniform force, a squeeze operation performed by the base 120 on the sealing units, as further described in the following.

A function of the base 120 is to carry the plurality of sealing units, and is particularly constructed to be operated (manually or automatically) to implement (for example, synchronous or one-time) squeezing on the plurality of sealing units 110 (and the optional dummy sealing unit 112).

Only an example is used. As shown in FIG. 5 and FIG. 6, the base 120 may include a first base 20 and a second base 30 that are assembled together. Further, the base 120 is constructed to allow the first base 20 and the second base 30 to be operated to move toward each other, and the plurality of sealing units 110 (and the optional dummy sealing unit 112) may be detachably mounted at different positions between the first base 20 and the second base 30. This allows elastic parts in the plurality of sealing units 110 to be squeezed between the first base and the second base and to be deformed.

In some embodiments, the first base 20 may include a first annular wall 22 and a plurality of first extension arms 21. The plurality of first extension arms 21 may extend radially from the first annular wall 22 to an outer side, to present a radioactive shape. Each sealing unit 110 (and the optional dummy sealing unit 112) may be detachably mounted in a compartment limited by the first annular wall 22 and two adjacent first extension arms 21. This means that adjacent sealing units 110 may be separated by the first extension arm 21 between the adjacent sealing units, and in particular, may be completely separated. Further, a radial direction of space of the first base 20 for mounting each sealing unit 110 (and the optional dummy sealing unit 112) may be open. This allows each sealing unit 110 (and the optional dummy sealing unit 112) to be mounted to or detached from the first base 20 along the radial direction. Only an example is used. FIG. 6 shows eight first extension arms 21, and eight compartments for mounting sealing units are limited. It is easy to understand that there may be more or fewer first extension arms, and correspondingly more or fewer compartments.

In some other embodiments, a plane on which each first extension arm 21 is located may extend to pass through a central axis of the first base 20. In this way, a design of the plurality of first extension arms 21 on the first base 20 may be concise and beautiful, and may be easily symmetric. In some other embodiments, there may be an included angle between two adjacent first extension arms 21, and all included angles between the plurality of first extension arms 21 may be equal to each other. In the foregoing manner, the sealing units 110 (and the optional dummy sealing unit 112) may be evenly distributed on the first base 20.

In addition, to facilitate mounting the sealing unit 110 (and the optional dummy sealing unit 112) on the first base 20, in some embodiments, a flange 211 that extends toward the compartment may be further disposed on a bottom edge of the first base 20. Therefore, the sealing unit 110 (and the optional dummy sealing unit 112) may be placed on the flange 211 in the compartment.

The second base 30 may have a shape and a structure that are similar to those of the first base 20, but a function of the second base 30 is different from that of the first base 20. Amain function of the second base 30 is to press against the sealing unit 110 (and the optional dummy sealing unit 112) placed on the first base 20.

For example, as shown in FIG. 6, similar to the first base 20, the second base 30 may similarly have a second annular wall 32 and a plurality of second extension arms 31. The plurality of second extension arms 31 may extend radially from the second annular wall 32 to an outer side, and a quantity of the plurality of second extension arms 31 may be the same as a quantity of the plurality of first extension arms 21. Particularly, when the sealing unit 110 is mounted between the first base 20 and the second base 30 (and the optional dummy sealing unit 112 is also mounted), bottoms of the second annular wall 32 and the plurality of second extension arms 31 may press against the sealing unit 110 (and the optional dummy sealing unit 112).

To achieve a pressing effect, in some embodiments, a diameter of the second annular wall 32 may be greater than a diameter of the first annular wall 22, to allow a part of the first annular wall 22 to be embedded in space limited by the second annular wall 32 even when the sealing unit 110 is mounted (and the optional dummy sealing unit 112 is also mounted). In addition, in some embodiments, a side that is of each second extension arm 31 and that faces the first extension arm 21 may be provided with a groove structure 311. When the second base 30 is mounted to the first base 20, each first extension arm 21 may be partially embedded in a groove structure 311 of a corresponding second extension arm 31. In this manner, the first base 20 and the second base 30 may be conveniently allowed to move toward and relative to each other along an axial direction of the cover assembly 100, to squeeze or loosen the sealing unit 110 (and the optional dummy sealing unit 112) located between the first base 20 and the second base 30.

To conveniently implement relative movement of the first base 20 and the second base 30 along the axial direction of the cover assembly 100, in some embodiments, the cover assembly 100 may further include a handle assembly 140. The handle assembly 140 may implement the relative movement by operating at least one of the first base 20 and the second base 30. In some other embodiments, the handle assembly 140 may be mounted to at least one of the first base 20 and the second base 30, and is constructed to be operated to rotate. Therefore, the user may control the movement of the first base 20 and the second base 30 relative to each other along the axial direction of the cover assembly 100 by operating rotation of the handle assembly 140.

Only an example is used. FIG. 1 to FIG. 3 and FIG. 5 show the handle assembly 140. The handle assembly 140 may further include an operable handle 141 and a screw rod 142. One end of the screw rod 142 may be attached to the handle 141, and the other end 143 may pass through the first base 20, and is screwed to the second base 30. In the manner of connecting the first base 20 and the second base 30 by using the screw rod, when the handle 141 is operated to rotate, the first base 20 and the second base 30 may move toward or be away from each other along the axial direction of the cover assembly 100. Further, in some examples, the handle assembly 140 may be mounted at a center of the cover assembly 100. In this case, the screw rod 142 may be disposed to pass through a through hole 25 at a center of the first base 20, and be screwed to, for example, a nut or a screw that is disposed at a center of the second base 30. For example, the through hole 25 may be positioned at a center of the first annular wall 21 of the first base 20. The nut or the screw may be fastened at a center of the second annular wall 32 of the second base 30. In some other examples, a flange 146 may be disposed on the screw rod 142. The flange 146 may be positioned on a side that is of the through hole 25 of the first base 20 and that faces the handle 141, to allow the second base 30 to move toward the first base 20 in a rotation process of the handle 141, and prevent the first base 20 from moving toward the second base 30.

It is easy to understand that, when the first base 20 and the second base 30 are operated to move relatively along the axial direction of the cover assembly 100, the plurality of sealing units 110 (and the optional dummy sealing unit 112) arranged between the first base 20 and the second base 30 may be squeezed. Therefore, an elastic part in the sealing unit 110 is deformed (and an elastic part in the optional dummy sealing unit 112 is also deformed). This deformation may allow to squeeze an optical cable (or a possible dummy cable plug) mounted on the through hole 111 and form or create sealing around the optical cable (or the possible dummy cable plug) at the at least one through hole 111. It is noted that, under the foregoing squeezing, the elastic part in the dummy sealing unit 112 may also be deformed, but squeezing and sealing on the optical cable (or the possible dummy cable plug) do not exist. This is because the dummy sealing unit 112 itself is an integrated sealing structure without the foregoing through hole 111.

Particularly, in some embodiments of this disclosure, there is no screw connection or another fastening relationship between the first base 20 and the screw rod 142. Therefore, the first base 20 may remain fixed in a rotation process of the screw rod 142, and only the second base 30 is operated to move toward the first base 20 along the axial direction of the cover assembly 100. It may be advantageous to control, in this manner, the second base 30 to move toward an axial direction of the first base 20. This is because the sealing unit 110 is mainly carried on the first base 20 (and the optional dummy sealing unit 112 is also carried on the first base 20), and edges of the first base 20 and the sealing unit 110 (and the optional dummy sealing unit 112) are wedged by a hold hoop member 160 at an opening edge of a enclosure body 130 (where reference is made to FIG. 2). In this way, even if the first base 20 is wedged by the hold hoop member 160 or is fastened in another manner, the handle assembly 140 may alternatively be controlled to implement relative movement and squeezing of the second base 30 toward the first base 20.

The foregoing describes the structures of the first base 20 and the second base 30 by using an example structure of an annular wall and an extension arm. However, it should be understood that this is not a limitation. In another embodiment, the first base 20 and the second base 30 may alternatively be presented in a structure of a non-annular wall and a non-extension arm, and the structure of the second base 30 may alternatively be different from the structure of the first base 20, provided that both the first base 20 and the second base 30 are applicable to positioning the plurality of sealing units (and the optional dummy sealing unit 112) at different positions between the first base 20 and the second base 30, and both the first base 20 and the second base 30 are applicable to moving toward each other to squeeze the plurality of sealing units (and the optional dummy sealing unit 112) between the first base 20 and the second base 30.

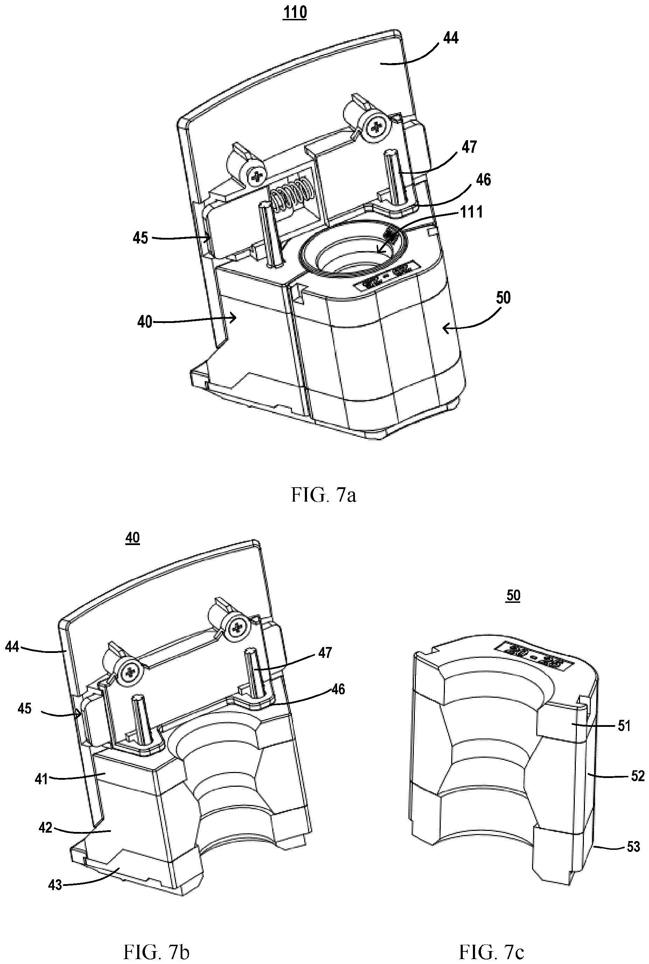

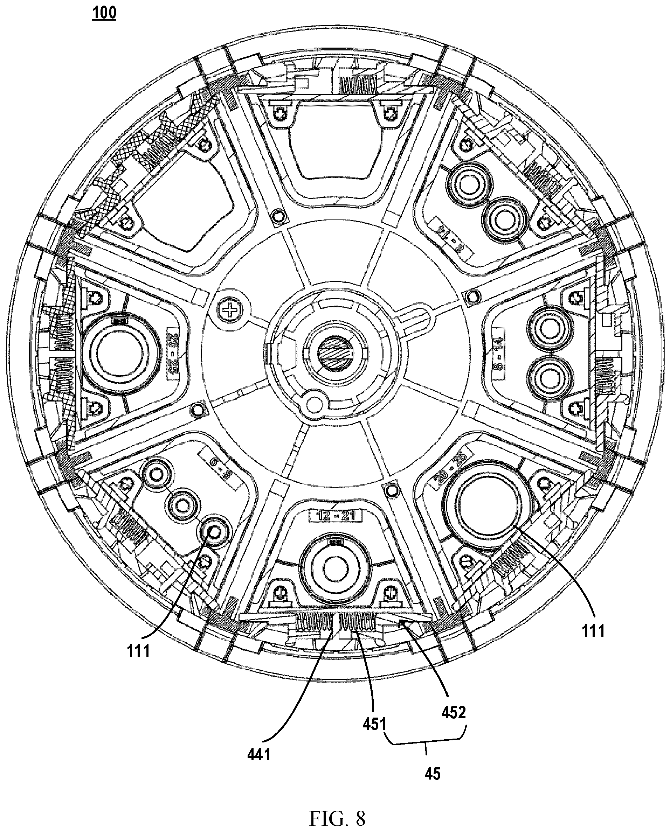

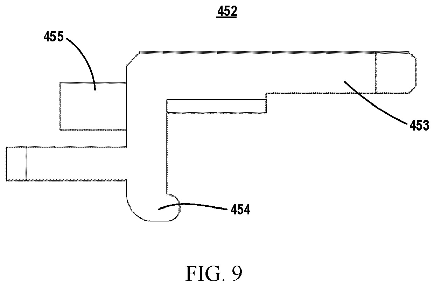

The following describes a specific implementation structure of a sealing unit 110 in this disclosure and a manner of mounting the sealing unit 110 on a base 120 with reference to FIG. 7a to FIG. 7c, FIG. 8, and FIG. 9. FIG. 7a to FIG. 7c are diagrams of structures of sealing units in a cover assembly in an optical splice closure according to example embodiments of this disclosure; FIG. 8 is a top view of a sealing unit having a clamping structure in the cover assembly in the optical splice closure according to an example embodiment of this disclosure; and FIG. 9 is a schematic diagram of a structure of the clamping structure of the sealing unit in the optical splice closure according to an example embodiment of this disclosure.

As shown in FIG. 7a to FIG. 7c, the sealing unit 110 mainly includes a first sealing member 40 and a second sealing member 50. The first sealing member 40 and the second sealing member 50 may be assembled together in a detachable manner, and may be combined to form at least a part of the foregoing at least one through hole 111. Particularly, a half of each through hole 111 may be separately limited by the first sealing member 40 and the second sealing member 50.

In some embodiments, an overall appearance of the sealing unit 110 (and an optional dummy sealing unit 112) may be constructed to match a shape of a compartment limited by a first annular wall 22 of a first base 20 and two adjacent first extension arms 21. This may allow at least a part of the sealing unit 110 (and the optional dummy sealing unit 112) (or particularly, all of the sealing units) to be limited in the compartment. Further, the first sealing member 40 may be an outer side component, and the second sealing member 50 may be an inner side component. In other words, when positioning is performed in the compartment, compared with the second sealing member 50, the first sealing member 40 may be positioned to be farther away from a center of the cover assembly 100 (or the first base 20).

As described above with respect to the first base 20, each compartment on the first base 20 is open in a radial direction. Therefore, each compartment may allow the sealing unit 110 (and the optional dummy sealing unit 112) to be detached from and/or mounted on the compartment in the radial direction. In addition, in an embodiment in which the sealing unit 110 includes the first sealing member 40 and the second sealing member 50, a structure of the compartment may allow the first sealing member 40 to be detachably mounted to the first base 20 along the radial direction and spliced with the second sealing member 50 mounted on the first base 20, and/or detached from the first base 20 and the second sealing member 50.

Only an example is used. As shown in FIG. 7b and FIG. 7c, the first sealing member 40 and the second sealing member may include upper press blocks 41 and 51, lower press blocks 43 and 53, and elastic parts 42 and 52 disposed between the upper press blocks 41 and 51 and the lower press blocks 43 and 53. A combination of the elastic parts 42 and 52 may form at least a part of the foregoing at least one through hole 111. In some examples, the elastic parts 42 and 52 may be constructed into a slope structure having a protrusion toward the through hole 111. Further, the upper press blocks 41 and 51 may be constructed to move toward the lower press blocks 43 and 53 under pressure of a second base 30, to squeeze the elastic parts 42 and 52 and enable the elastic parts 42 and 52 to be deformed. This deformation of the elastic parts 42 and 52 may allow to squeeze an optical cable (or a possible dummy cable plug) mounted on the through hole 111, to form or create sealing around the optical cable (or the possible dummy cable plug) at the through hole 111. Only an example is used. The elastic parts 42 and 52 may be made of gel.

In some embodiments, the first sealing member 40 may further include an enclosure 44. The enclosure 44 may be arranged to wrap and seal the upper press block 41 and the lower press block 43 from a radial outer side of the first sealing member 40, as shown in FIG. 7b. It will be understood that a main function of the enclosure 44 is to mount another component on the enclosure 44, to provide another function other than squeezing for the first sealing member 40. In an example, the another component may be, for example, a clamping structure 45 attached to the enclosure 44 and a guide structure, for example, a guide part 46. It should be noted herein that, although the enclosure 44 wraps and seals the upper press block 41 and the lower press block 43 from the radial outer side, the enclosure 44 is specially fastened only to the lower press block 43, and is not fastened to the upper press block 41. This may avoid obstructing movement of the upper press block 41 relative to the lower press block 43. In some embodiments, the enclosure 44 may further include a bottom enclosure attached to a bottom of the lower press block 43, so that the enclosure 44 is in an approximately L-shaped structure. This manner may help the enclosure 44 hold the lower press block 43 and another component on the lower press block 43 from a lower side of the lower press block 43.

In some other embodiments, the enclosure 44 may extend on a radial outer side of the cover assembly 100 along an axial direction away from the lower press block 43, and an extension length may be sufficient to cover a radial outer side of the second base 30 when the second base 30 is mounted to the first base 20. In this manner, when the second base 30 is mounted to the first base 20, the enclosure 44 may wrap a large part of a combination of the second base 30 and the first base 20, and the second base 30, the first base 20, and the upper press block, the lower press block, and the elastic part that are clamped between the upper first bases are almost invisible from the radial outer side.

In some embodiments, the clamping structure 45 may be positioned on an inner side wall of the enclosure 44, and may mainly include a clamping component 452 and a spring component 451. Only an example is used. As shown in FIG. 8, the clamping component 452 and the spring component 451 may be arranged in pairs on two sides of a tangential direction of the enclosure 44 (where the tangential direction is perpendicular to the foregoing radial direction), to allow the clamping components 452 on the two sides to be clamped to a base 120 (particularly, the first base 20) under an action of a spring, so that each sealing unit 110 or the first sealing member 40 (or the optional dummy sealing unit 112) is clamped and fastened to the first base 120 (particularly, for example, the first base 20). More specifically, the spring component 451 may be mounted on a horizontal separator 441 that is of the enclosure 44 and that extends toward a central axis of the cover assembly 100. One end 455 of the clamping component 452 may be mounted to the spring component 451, and the other end 453 may be clamped to a notch of the first base 20 under an action of the spring component 451, so that the first sealing member 40 is clamped and fastened to the first base 20. To facilitate an operation on the clamping component 452, as shown in FIG. 9, the clamping component 452 may further include a clamping operation part 454 extending from a main body of the clamping component 452. When the clamping component 452 is mounted on the inner side wall of the enclosure 44, the clamping operation part 454 may be exposed from the enclosure 44 in a radial direction of the first base 20 (or the compartment). In other words, although the enclosure 44 wraps and seals a main part of the first sealing member 40 from the radial outer side, the enclosure 44 may have an opening to allow the clamping operation part 454 to be exposed from the radial direction of the first base 20 (or the compartment). For example, exposure of the clamping operation part 454 may be clearly seen in FIG. 3. It is easy to understand that, in this manner, it is convenient for an operator to operate clamping operation parts 454 in pairs on the radial outer side of the cover assembly 100 (where for example, a user may pinch, in directions to each other, the clamping operation parts 454 in pairs), to implement clamping and releasing the sealing unit 110 or the first sealing member 40 (or the optional dummy sealing unit 112) to the first base 20.

In some other embodiments, a guide part 46 may be further disposed on the enclosure 44. The guide part 46 may be positioned on a side that is of the upper press block 41 and that is opposite to the elastic part 42, and extends from the enclosure 44 toward the central axis of the cover assembly 100. Correspondingly, a mating part 47 may be disposed on the upper press block 41 of the first sealing member 40. The mating part 47 and the guide part 46 may be assembled together, to guide the upper press block 41 to move relative to the lower press block 43 along the axial direction of the cover assembly 100. Only an example is used. The guide part 46 may be a guide hole, and the mating part 47 may be a guide column. However, it will be understood that, it is also possible that the guide part 46 and the mating part 47 are constructed into another guide structure that is different from the structure shown in FIG. 7a and FIG. 7b.

The foregoing has described in detail a structural feature and an implementation principle of the cover assembly 100 in this disclosure. It is easy to understand that, by using the cover assembly 100 in this disclosure, when an optical cable is mounted, the second sealing member 50 may be first placed on the first base 20, and then the optical cable may be mounted on a part of the through hole 111 of the second sealing member 50 in the open radial direction of the first base 20. Then, the first sealing member 40 may be mounted to the first base 20 and the second sealing member 50. Finally, for example, the handle assembly 140 may be operated to control the second base 30 to move relative to the first base 20 along the axial direction of the cover assembly 100, to squeeze and seal, at a time (or synchronously), the optical cable (or the possible dummy cable plug) mounted on the sealing unit 110 and squeeze the possible dummy sealing unit 112. It is easy to understand that, in the foregoing manner, a conventional cable threading mounting manner may be avoided, so that mounting the optical cable on the closure is simplified. This is because based on the design of this disclosure, the optical cable may be mounted to the base 120 in the radial direction. In addition, the structure of the cover assembly 100 may further allow to implement, at a time (or synchronously), a technical effect of squeezing and sealing a plurality of optical cables mounted on the sealing unit 110.

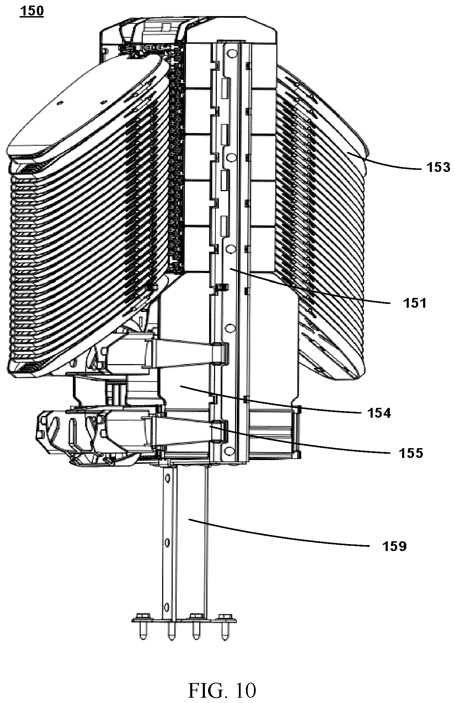

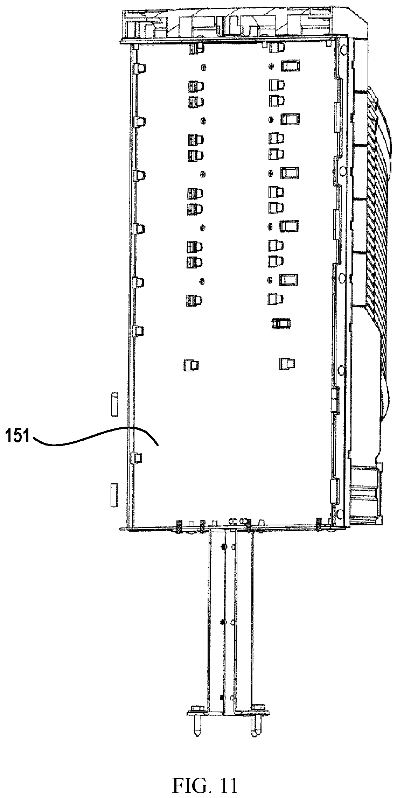

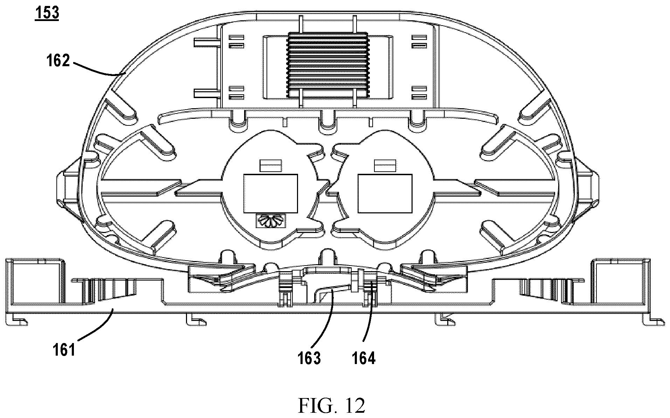

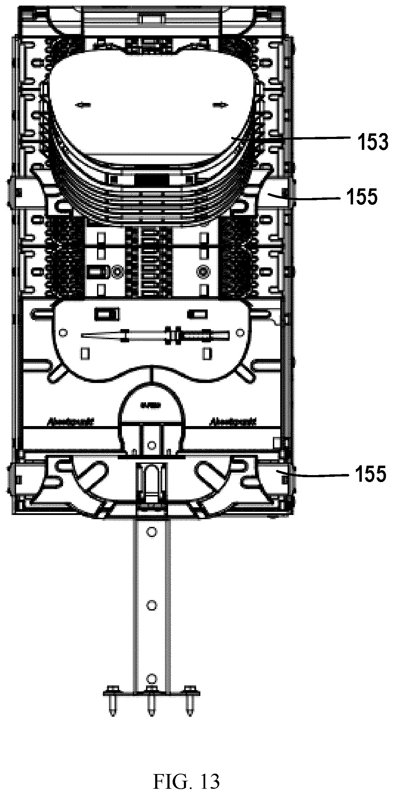

The foregoing mainly describes the cover assembly 100 in the optical splice closure 200. The following briefly describes structures of other assemblies in the optical splice closure 200. FIG. 10 is a schematic diagram of a structure of an optical fiber operation unit in an optical splice closure according to an example embodiment of this disclosure; FIG. 11 is a schematic diagram of a structure of a splicing tray support of the optical fiber operation unit in the optical splice closure according to an example embodiment of this disclosure; FIG. 12 is a schematic diagram of a structure of cooperation between the fusion splice protector support and a fusion splice protector in the optical splice closure according to an example embodiment of this disclosure; and FIG. 13 is a schematic diagram of a structure of adjusting a position of a loose tube coiled support in the optical splice closure according to an example embodiment of this disclosure.

As shown in FIG. 10 to FIG. 13, the optical fiber operation unit 150 may mainly include a sheet metal support 151, a fusion splice protector assembly 153, an optical fiber introducing unit 154, and a loose tube coiled support 155.

Specifically, as shown in FIG. 10 and FIG. 11, the sheet metal support 151 is mainly used to mount and support the fusion splice protector assembly 153, the optical cable introducing unit 154, the loose tube coiled support 155, and the like. Particularly, the sheet metal support 151 may be fastened to a cover assembly 100 (particularly, fastened to a second base 30) by using a connecting rod 159, so that the sheet metal support 151 and the cover assembly 100 are relatively fastened. To facilitate mounting the foregoing plurality of components on the sheet metal support 151, the sheet metal support 151 may be provided with a plurality of slots, and the foregoing plurality of components may be mounted on the sheet metal support 151 in a clamping manner.

As shown in FIG. 12, the fusion splice protector assembly 153 may include a splicing tray support 161 and at least one fusion splice protector 162 attached to the splicing tray support 161. In some embodiments, a back side of the splicing tray support 161 may be provided with a plurality of hook structures, to allow the splicing tray support 161 to be clamped into a groove structure of the sheet metal support 151, so that the splicing tray support 161 is still fastened to the sheet metal support 151. Further, in some embodiments, a rotating shaft 164 may be disposed on the fusion splice protector 162. The rotating shaft 164 may form shaft hole cooperation with a rotating shaft hole (which is not marked) on the splicing tray support 161, so that a function of rotating the fusion splice protector 162 on the splicing tray support 161 is implemented. In addition, in some embodiments, an elastic hook 163 may be disposed near the rotating shaft hole of the fusion splice protector support 161, and the elastic hook 163 may push against a root of the rotating shaft of the fusion splice protector 162. In this manner, movement of the fusion splice protector 162 in a transverse direction perpendicular to an axial direction of the cover assembly 100 may be limited, so that the rotating shaft of the fusion splice protector 162 is not detached from the rotating shaft hole of the splicing tray support 161. If the fusion splice protector 162 needs to be detached, the elastic hook 163 may be pressed to a position under the root of the rotating shaft, and then the fusion splice protector 162 may be detached by horizontally dragging the fusion splice protector 162.

A function of the loose tube coiled support 155 is to coil a loose tube. In some embodiments, elastic hooks may be disposed on left and right sides of the loose tube coiled support 155. For example, the elastic hooks may be clamped to the slot on the sheet metal support 151 in a side direction of the sheet metal support 151. During detachment, the loose tube coiled support 155 may be detached only by pulling the elastic hooks out of the slot on the sheet metal support 151. In some embodiments, when an optical cable is, for example, a straight-through cable, a loose tube of the straight-through cable may enter the loose tube coiled support 155 for coiled storage. In some other embodiments, when more loose tubes (of, for example, straight-through cables) need to be coiled for storage, a part of the fusion splice protector 162 may be detached, and the loose tube coiled support 155 is detached, and is mounted in another slot position of the sheet metal support 151, so that a coiled storage capacity of the loose tube is adjustable.

The optical cable introducing unit 154 may be configured to guide an optical cable into the loose tube coiled support 155 and/or the fusion splice protector assembly 153. Similarly, the optical cable introducing unit 154 may alternatively be attached to the sheet metal support 151 in a hook manner.

The optical splice closure 200 in this disclosure has been described above, and the cover assembly 100 in the optical splice closure 200 is specifically described. It is easy to understand that, the optical splice closure 200 in this disclosure can implement various beneficial technical effects brought by the cover assembly 100. In addition, although the foregoing describes the optical splice closure 200, it may be further understood that, the optical splice closure 200 in this disclosure may further form a part of a larger optical cable connection apparatus.

Although the present invention has been illustrated and described in detail in the accompanying drawings and the foregoing descriptions, such illustration and descriptions should be considered as illustrative or an example rather than restrictive. The present invention is not limited to the disclosed embodiments. Other variations of the disclosed embodiments can be understood and practiced by a person skilled in the art in practicing the claimed invention from a study of the accompanying drawings, the disclosure, and the appended claims.

In the claims, the word "comprising" does not exclude other elements, and the indefinite term "a" or "one" does not exclude a plurality. A single element or another unit may implement the functions of a plurality of items set forth in the claims. The mere fact that some features are recorded only in different embodiments or dependent claims does not indicate that a combination of these features cannot be used advantageously. Without departing from the scope of this application, the protection scope of this application covers any possible combination of the features recorded in all embodiments or dependent claims.

In addition, any reference mark in the claims should not be construed as limiting the scope of the present invention.

## Claims

1. An optical splice closure (200), comprising:
a enclosure body (130), provided with an accommodating cavity (131) and an opening (132) located on one end of the accommodating cavity (131); and
a cover assembly (100), detachably mounted to the opening (132), wherein the cover assembly (100) comprises:
a first base (20) and a second base (30) that are assembled together; and
a plurality of sealing units (110), detachably mounted at different positions between the first base (20) and the second base (30), wherein each sealing unit (110) is provided with at least one through hole (111) for mounting an optical cable, the optical cable is applicable to extending into the accommodating cavity (131) through the at least one through hole (111), elastic parts (42, 52) are disposed in each sealing unit (110), and the elastic parts (42, 52) form at least a part of the at least one through hole (111), wherein
the first base (20) and the second base (30) can be operated to move toward each other to squeeze the plurality of sealing units (110), to enable a plurality of corresponding elastic parts (42, 52) in the plurality of sealing units (110) to be deformed, to seal the at least one through hole (111) for mounting the optical cable.

2. The optical splice closure (200) according to claim 1, wherein the first base (20) comprises: a first annular wall (22) and a plurality of first extension arms (21), and the plurality of first extension arms (21) extend radially from the first annular wall (22) to an outer side, wherein
each of the sealing units (110) is detachably mounted in a compartment limited by the first annular wall (22) and two adjacent first extension arms (21).

3. The optical splice closure (200) according to claim 2, wherein the plurality of sealing units (110) are evenly distributed around the first annular wall (22), and adjacent sealing units (110) are separated by the first extension arm (21).

4. The optical splice closure (200) according to any one of claims 1 to 3, wherein the cover assembly (100) further comprises:
a handle assembly (140), mounted to the first base (20) and the second base (30), and capable of being operated to rotate, to enable the first base (20) and the second base (30) to move relative to each other along an axial direction of the cover assembly.

5. The optical splice closure (200) according to claim 4, wherein the handle assembly (140) comprises:
an operable handle (141); and
a screw rod (142), wherein one end of the screw rod is attached to the handle (141), and the other end passes through the first base (20), and is screwed to the second base (30).

6. The optical splice closure (200) according to claim 5, wherein the screw rod (142) is disposed to pass through a through hole (25) on the first base (20), a flange (146) is disposed on the screw rod, and the flange (146) is positioned to be adjacent to the through hole (25) on the first base (20) and on a side that is of the first base (20) and that faces the handle (141), to allow only the second base (30) to move toward the first base (20) along the axial direction of the cover assembly in a rotation operation process of the handle, and prevent the first base (20) from moving toward the second base (30).

7. The optical splice closure (200) according to any one of claims 1 to 6, wherein each sealing unit (110) comprises a first sealing member (40) and a second sealing member (50) that are detachably assembled together, and the at least one through hole (111) is limited by the first sealing member (40) and the second sealing member (50) in combination; and
compared with the second sealing member (50), the first sealing member (40) is positioned to be farther away from a center of the first base (20).

8. The optical splice closure (200) according to claim 7, wherein a radial direction of a compartment on the first base (20) for mounting each of the sealing units (110) is open, to allow the first sealing member (40) to be detachably mounted to the first base (20) along the radial direction and to be spliced with the second sealing member (50).

9. The optical splice closure (200) according to claim 7 or 8, wherein the first sealing member (40) and the second sealing member (50) comprise upper press blocks (41, 51), lower press blocks (43, 53), and elastic parts (42, 52) disposed between the upper press blocks (41, 51) and the lower press blocks (43, 53), and the upper press blocks (41, 51) can move toward the lower press blocks (43, 53) under pressure of the second base (30), to squeeze the elastic parts (42, 52) and enable the elastic parts (42, 52) to be deformed; and
a combination of the elastic part (42) of the first sealing member (40) and the elastic part (52) of the second sealing member (50) forms at least a part of the at least one through hole (111).

10. The optical splice closure (200) according to any one of claims 7 to 9, wherein the first sealing member (40) further comprises an enclosure (44), and the enclosure (44) at least wraps and seals the upper press block (41) and the lower press block (43) from a radial outer side of the first sealing member (40), and is fastened only to the lower press block (43), to avoid obstructing movement of the upper press block (41) relative to the lower press block (43).

11. The optical splice closure (200) according to claim 10, wherein the enclosure (44) is provided with a clamping structure (45), and the clamping structure (45) comprises a clamping component (452) and a spring component (451), wherein
the spring component (451) is mounted on the enclosure (44), one end of the clamping component (452) is mounted to the spring component (451), and the other end is applicable to being clamped to the first base (20), to clamp and fasten the first sealing member (40) to the first base (20).

12. The optical splice closure (200) according to claim 11, wherein the clamping component (452) further comprises a clamping operation part (454), and the clamping operation part (454) is exposed from the enclosure (44) in a radial direction of the first base (20), to enable the clamping operation part (454) to be operated on a radial outer side of the cover assembly (100), and enable the clamping structure (45) to be clamped to the first base (20) or released from the first base (20).

13. The optical splice closure (200) according to any one of claims 10 to 12, wherein a guide part (46) is further disposed on the enclosure (44), a mating part (47) is disposed on the upper press block (41) of the first sealing member (40), and the mating part (47) and the guide part (46) are assembled together, to guide the upper press block (41) to move relative to the lower press block (43).

14. The optical splice closure (200) according to any one of claims 1 to 13, wherein the second base (30) comprises: a second annular wall (32) and a plurality of second extension arms (31), and the plurality of second extension arms (31) extend radially from the second annular wall (32) to an outer side;
a diameter of the second annular wall (32) is greater than a diameter of the first annular wall (22); and
when the second base (30) is mounted to the first base (20), the second annular wall (32) and the second extension arm (31) press against the sealing unit (110).

15. The optical splice closure (200) according to claim 14, wherein a side that is of each second extension arm (31) and that faces the first extension arm (21) is provided with a groove structure (311), and when the second base (30) is mounted to the first base (20), each first extension arm (21) is partially embedded in a groove structure (311) of a corresponding second extension arm (31).

16. The optical splice closure (200) according to any one of claims 1 to 15, wherein the elastic parts (42, 52) are made of gel.

17. An optical cable connection apparatus, comprising the optical splice closure (200) according to any one of claims 1 to 16.
